# EUROPEAN PATENT APPLICATION

(11) **EP 4 472 236 A1**
(43) Date of publication of application: **04.12.2024**
(21) Application number: 23796606.4
(22) Date of filing: 08.03.2023
(51) Int. Cl.: H04R 7/04, H04R 1/02, H04N 5/64

(54) **ACOUSTIC OUTPUT DEVICE**

(30) Priority: 26.04.2022 KR 20220051616
(71) Applicant: Samsung Electronics Co., Ltd, Suwon-si, Gyeonggi-do 16677 (KR)
(72) Inventor: YOON, Euihan, Suwon-si Gyeonggi-do 16677 (KR); KIM, Taemyun, Suwon-si Gyeonggi-do 16677 (KR)
(74) Representative: Walaski, Jan Filip
(86) International application number: PCT/KR2023/003176
(87) International publication number: WO 2023/210956

(57) **Abstract**

An audio output device is disclosed. The audio output device includes a speaker driver which includes a diaphragm generating sounds, and wherein the diaphragm is arranged on the front surface, an enclosure wherein the speaker driver is arranged on the inside, and which fixes the speaker driver, and a filter member that is arranged between the rear surface of the speaker driver and the inner surface of the enclosure, wherein the filter member includes a plurality of through holes, and is arranged to be distanced from the inner surface of the enclosure.

## Description

### [TECHNICAL FIELD]

The disclosure relates to an audio output device, and more particularly, to an audio output device including a structure for removing a standing wave that is generated inside the audio output device.

### [DESCRIPTION OF THE RELATED ART]

In the case of a flat panel display device such as an LCD television (TV), an LED TV, a quantum dot TV, an OLED TV, a monitor, etc., as the thickness of the device becomes gradually thinner, the performance of a built-in speaker provided in the flat panel display device becomes limited.

Recently, for resolving such limitation of the performance of a built-in speaker, a sound bar is being widely used together with a thin type flat panel display device.

Meanwhile, a standing wave is generated if a sound wave generated in a speaker driver of a sound bar is reflected from the inside of an enclosure and interferes with a sound wave proceeding to the outside of the enclosure, and there is a problem that the quality of a sound reproduced by the sound bar is reduced.

In the past, a reflected wave was absorbed by arranging a sound absorbing material inside a sound bar for removing such a standing wave. However, in the case of using a sound absorbing material, there was a problem that heat generated inside the enclosure could not be discharged to the outside smoothly.

### [DETAILED DESCRIPTION OF THE INVENTION]

### [TECHNICAL TASK]

The disclosure is for addressing the aforementioned problems, and the purpose of the disclosure is in providing an audio output device wherein a filter member on which a plurality of through holes are formed is installed inside an enclosure, and accordingly, the standing wave removing performance can be improved, and heat can be discharged smoothly and the stiffness of the enclosure can be reinforced.

### [TECHNICAL SOLUTION]

For achieving the aforementioned purpose, an audio output device according to an embodiment of the disclosure includes a speaker driver which includes a diaphragm generating sounds, and wherein the diaphragm is arranged on the front surface, an enclosure wherein the speaker driver is arranged on the inside, and which fixes the speaker driver, and a filter member that is arranged between the rear surface of the speaker driver and the inner surface of the enclosure, wherein the filter member includes a plurality of through holes, and is arranged to be distanced from the inner surface of the enclosure.

In this case, the filter member may include a first filter member and a second filter member which are sequentially arranged between the rear surface of the speaker driver and the inner surface of the enclosure, and which respectively include a plurality of through holes.

In this case, at least one of the shapes or the arrangement form of the plurality of through holes arranged respectively on the first filter member and the second filter member may be different.

Meanwhile, the plurality of through holes may be formed in at least one shape among a circle, an oval, a polygon, and a polygon of which edges are round.

Meanwhile, the plurality of through holes may be arranged in a matrix form.

Meanwhile, the enclosure may be formed in a rectangular shape of which inside is empty, and the upper part and the lower part of the filter member may be fixed to the inner surface of the enclosure.

Meanwhile, the filter member may have a plate shape on which a plurality of through holes are formed, and the plurality of through holes may be formed to penetrate the front and rear surfaces of the filter member.

Meanwhile, the filter member may be formed to have a size corresponding to the rear surface of the speaker driver.

Meanwhile, the audio output device may further include a sound absorbing material arranged on one surface of the filter member.

Meanwhile, an interval between the filter member and the inner surface of the enclosure may be determined according to a distance between the rear surface of the speaker driver and the inner surface of the enclosure.

### [BRIEF DESCRIPTION OF THE DRAWINGS]

FIG. 1 is a perspective view illustrating an audio output device according to an embodiment of the disclosure;
FIG. 2 is a cross-sectional view that is cut along II-II in FIG. 1;
FIG. 3 to FIG. 6 are diagrams illustrating various embodiments related to shapes and an arrangement form of a plurality of through holes formed on a filter member;
FIG. 7 is a diagram for illustrating an audio output device wherein two filter members are arranged according to an embodiment of the disclosure;
FIG. 8 is a diagram for illustrating an audio output device wherein a filter member and a sound absorbing material are arranged according to an embodiment of the disclosure; and
FIG. 9 is a diagram for illustrating a structure wherein a filter member is arranged inside an enclosure according to an embodiment of the disclosure.

### [MODE FOR IMPLEMENTING THE INVENTION]

The embodiments described below are exemplary embodiments for promoting understanding of the disclosure, and it should be noted that the disclosure may be implemented while being modified in various forms, unlike the embodiments described herein. Meanwhile, in explaining the disclosure below, in case it is determined that detailed explanation of related known functions or components may unnecessarily confuse the gist of the disclosure, the detailed explanation and detailed illustration will be omitted. Also, in the accompanying drawings, some components may not be illustrated according to their actual sizes but they may be illustrated in exaggerated sizes, for promoting understanding of the disclosure.

In addition, as terms used in this specification and the claims, general terms were selected, in consideration of the functions described in the disclosure. However, the terms may vary depending on the intention of those skilled in the art, legal or technical interpretation, or emergence of new technologies, etc. Also, there are terms that were arbitrarily designated by the applicant, and the meaning of such terms may be interpreted as defined in this specification. Terms that are not specifically defined in the disclosure may be interpreted based on the overall content of the disclosure and common technical knowledge in the pertinent art.

Further, in the description of the disclosure, the order of each step should be understood in a non-restrictive way, unless a preceding step should necessarily be performed prior to a subsequent step in a logical and temporal sense. That is, excluding an exceptional case as above, even if a process described as a subsequent step is performed prior to a process described as a preceding step, there would be no influence on the essence of the disclosure, and the scope of the disclosure should also be defined regardless of the orders of steps.

Also, in this specification, expressions such as "have," "may have," "include," and "may include" denote the existence of such characteristics (e.g.: elements such as numbers, functions, operations, and components), and do not exclude the existence of additional characteristics.

In addition, terms such as 'the first,' 'the second,' etc. may be used to describe various elements, but the terms are not intended to limit the elements. The terms may be used only for the purpose of distinguishing one element from another element. For example, a first element may be called a second element, and a second element may be called a first element in a similar manner, without departing from the scope of the disclosure.

Further, terms such as `front surface,' `rear surface,' 'top surface,' `bottom surface,' `side surface,' `left side,' `right side,' `upper part,' `lower part,' and the like used in the disclosure were defined based on the drawings, and the shapes and locations of respective elements are not limited by these terms.

Also, in this specification, elements necessary for explanation of each embodiment of the disclosure are described, and thus elements are not necessarily limited thereto. Accordingly, some elements may be changed or omitted, or other elements may be added. In addition, elements may be arranged to be dispersed in devices independent from one another.

Further, while the embodiments of the disclosure will be described in detail with reference to the following accompanying drawings and the content described in the accompanying drawings, it is not intended that the disclosure is restricted or limited by the embodiments.

Hereinafter, the disclosure will be described in detail with reference to the accompanying drawings.

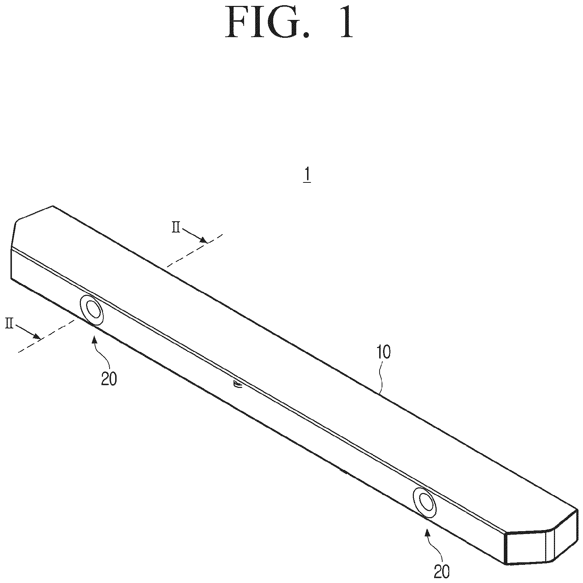

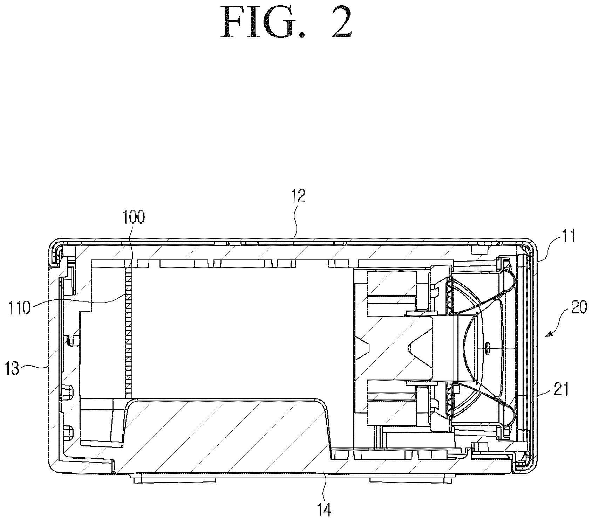

FIG. 1 is a perspective view illustrating an audio output device according to an embodiment of the disclosure, and FIG. 2 is a cross-sectional view that is cut along II-II in FIG. 1.

Referring to FIG. 1 or FIG. 2, an audio output device 1 according to an embodiment of the disclosure may include an enclosure 10, a speaker driver 20, and a filter member 100.

The enclosure 10 may surround the speaker driver 20, and form the exterior of the audio output device 1. The enclosure 10 may fix the speaker driver 20.

The enclosure 10 may be formed in an approximately rectangular shape. That is, the enclosure 10 may be formed as a rectangular shape of which inside is empty. Here, the speaker driver 20 may be fixed to the enclosure 10 such that a diaphragm 21 is exposed to the front surface 11 of the enclosure 10. The rear part of the speaker driver 20 is in a form of being enclosed by the enclosure 10.

The speaker driver 20 may include a diaphragm 21 generating sounds. The diaphragm 21 of the speaker driver 20 may be driven by various methods. For example, the speaker driver 20 may output sounds by vibrating the diaphragm 21 by using a magnet generating magnetic flux and a voice coil that moves as magnetic force is generated when power is applied.

The diaphragm 21 is formed to be able to reproduce sounds by vibration. As the material of the diaphragm 21, various materials may be used. For example, the diaphragm 21 may be manufactured by using paper, pulp, talc, mica, polypropylene, graphite, glass fiber, carbon, aluminum, etc.

The shape of the diaphragm 21 is not specifically limited. For example, the diaphragm 21 may be formed in one shape among a circle, an oval, a track form, or a quadrangle. Alternatively, the diaphragm 21 may also be formed in an irregular shape.

Meanwhile, as the diaphragm 21 vibrates, sounds waves are generated in the front and rear directions, and a sound wave generated in the rear surface direction of the diaphragm 21 is reflected on the internal wall surface of the enclosure 10, and the reflected wave is overlapped with a sound wave generated in the front surface direction of the diaphragm 21 or is extinguished, and accordingly, a standing wave that reduces the performance of the audio output device 1 is generated. For removing a standing wave, energy of a reflected wave that is reflected from the inner surface of the enclosure 10 should be extinguished or lowered.

For this, in the audio output device 1 according to embodiment of the disclosure, the filter member 100 may be arranged in the inner space of the enclosure 10.

Referring to FIG. 2, the filter member 100 may be arranged between the rear surface of the speaker driver 20 and the inner surface of the enclosure 10, and may include a plurality of through holes 110.

The filter member 100 may be arranged to be adjacent to the inner side of the rear surface 13 of the enclosure 10, and may proceed through the plurality of through holes 110 and reflect a reflected wave that was reflected on the rear surface 13 of the enclosure 10 to the side of the rear surface 13 again, and may thereby reduce the energy of the reflected wave.

The filter member 100 may be formed to have a size corresponding to the rear surface of the speaker driver 20.

Meanwhile, the filter member 100 may be arranged to be distanced from the inner surface of the enclosure 10. The interval between the filter member 100 and the inner surface of the enclosure 10 may be determined according to the distance between the rear surface of the speaker driver 20 and the inner surface of the enclosure 10.

Also, the upper part and the lower part of the filter member 100 are fixed to the inner surface of the enclosure 10 and reinforce the stiffness of the enclosure 10, and accordingly, a bracing effect of reducing resonance phenomena of the enclosure 10 that may be generated as a sound is output by the speaker driver 20 can be exerted.

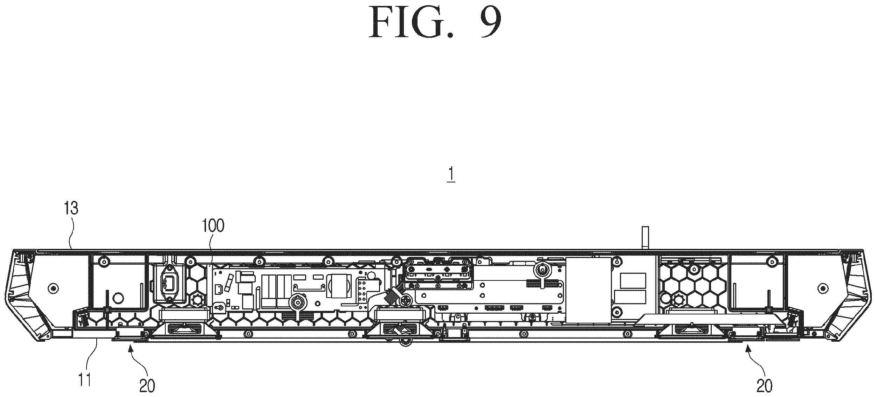

Also, the arrangement location of the filter member 100 may not be limited to the rear surface part of the speaker driver 20, and the filter member 100 may be installed in an area wherein a bracing effect or a resistance component of an air flow is required inside the enclosure 10. For example, the filter member 100 may be installed in an area wherein a big air flow is generated in the inner space of the enclosure 10, and resistance to the air flow may thereby be applied, and accordingly, damage that can occur according to the air flow can be prevented. Detailed explanation in this regard will be described later with reference to FIG. 9.

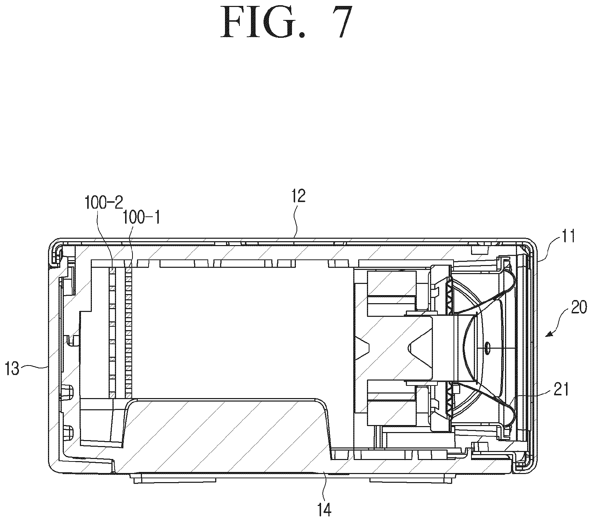

Meanwhile, the filter member 100 may include a first filter member and a second filter member which are sequentially arranged between the rear surface of the speaker driver 20 and the inner surface of the enclosure 10, and which respectively include a plurality of through holes. In this case, the shapes or the arrangement form of the plurality of through holes respectively formed on the first filter member and the second filter member may be different. Accordingly, an effect of removing a standing wave can be improved more than a case of arranging one filter member or a plurality of filter members having the same shape. Detailed explanation in this regard will be described later with reference to FIG. 7.

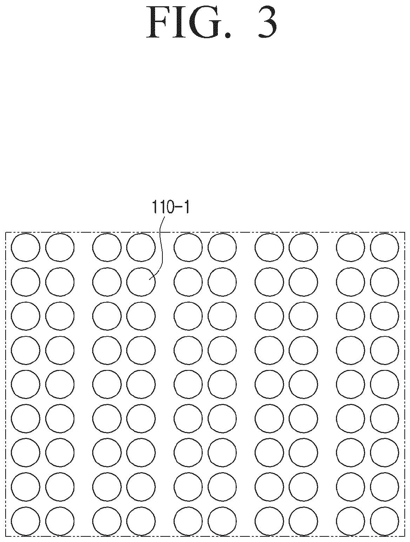

Hereinafter, various embodiments related to the form of the filter member 100 will be described with reference to FIG. 3 to FIG. 6.

FIG. 3 to FIG. 6 are diagrams illustrating various embodiments related to shapes and an arrangement form of a plurality of through holes formed on a filter member.

The filter member 100 may have a plate shape on which a plurality of through holes are formed. The plurality of through holes may be formed to penetrate the front and rear surfaces of the plate of the filter member 100.

The plurality of through holes may be formed in at least one shape among a circle, an oval, a polygon, and a polygon of which edges are round, and may be arranged in various ways. For example, the plurality of through holes may be arranged in a matrix form wherein the through holes are regularly arranged along rows and columns.

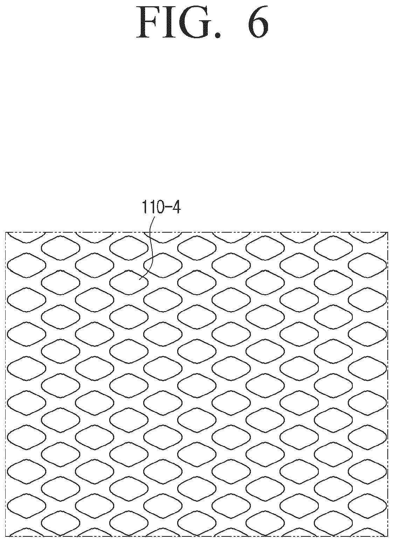

FIG. 3 and FIG. 6 respectively illustrate an embodiment of a filter member having a plurality of circle through holes 110-1, and an embodiment of a filter member having a plurality of rhombus through holes 110-4.

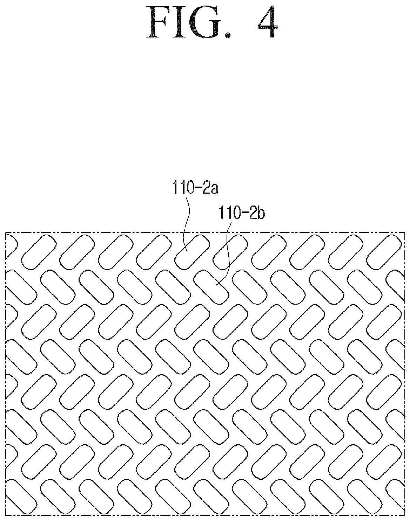

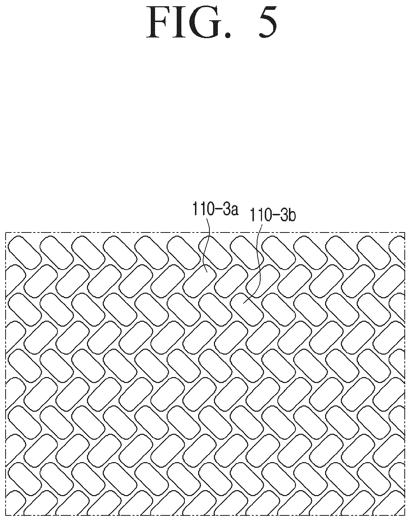

FIG. 4 and FIG. 5 illustrate various embodiments of a filter member wherein rows arranged in different forms are arranged alternately along a column direction.

Referring to FIG. 4, the filter member has a form wherein a plurality of through holes 110-2a having quadrangle forms tilted to one side are arranged along a row direction, and on the row below, a plurality of through holes 110-2b having quadrangle forms tilted to the other side are arranged along a row direction, and the two kinds of row arrangements are arranged alternately along a column direction.

Likewise, referring to FIG. 5, the filter member has a form wherein a plurality of through holes 110-3a having polygon forms tilted to one side are arranged along a row direction, and on the row below, a plurality of through holes 110-3b having polygon forms tilted to the other side are arranged along a row direction, and the two kinds of row arrangements are arranged alternately along a column direction.

FIG. 7 is a diagram for illustrating an audio output device wherein two filter members are arranged according to embodiment of the disclosure.

Referring to FIG. 7, a first filter member 100-1 and a second filter member 100-2 may be sequentially arranged between the rear surface of the speaker driver 20 and the inner surface of the enclosure 10.

The first filter member 100-1 and the second filter member 100-2 may respectively include a plurality of through holes, and the shapes or the arrangement form of the plurality of through holes formed on each filter member may be different.

Accordingly, as the number of times of collision increases as a sound wave which is generated from the diaphragm 21 and proceeds to the inside of the enclosure 10 collides with the first filter member 100-1, the second filter member 100-2, and the inner surface of the enclosure 10, an effect of reducing energy of a reflected wave can be improved, and an effect of removing a standing wave can also be improved.

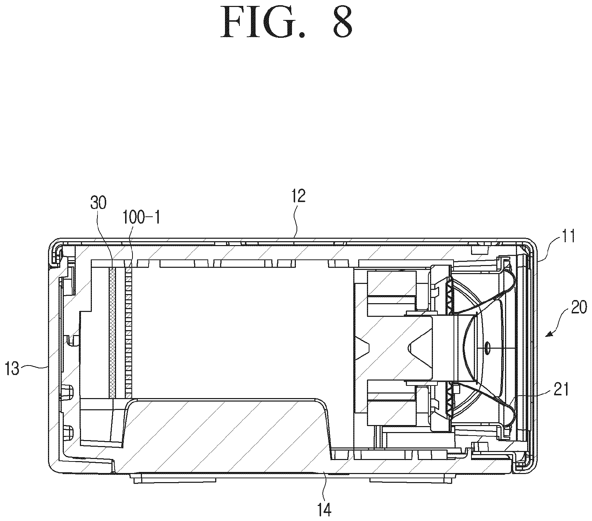

Meanwhile, in embodiment of the disclosure, an effect of removing a standing wave can be further improved by adding a sound absorbing material. Referring to FIG. 8, as a sound absorbing material 30 is arranged on one surface of the filter member 100, reflected waves that remained after colliding with the filter member 100 and the inner surface of the enclosure 10 can be additionally absorbed.

FIG. 9 is a diagram for illustrating a structure wherein a filter member is arranged inside an enclosure according to embodiment of the disclosure. FIG. 9 is a diagram wherein the inner space of the enclosure 10 is viewed from the above. Referring to FIG. 9, the filter member 100 may be arranged in the side surface space of the speaker driver 20 but not the rear surface part of the speaker driver 20. Accordingly, the stiffness of the enclosure 10 can be reinforced by supporting the inner space of the enclosure 10 by using the filter member 100. Also, as resistance to an air flow is applied by arranging the filter member 100 in an area wherein a resistance component of an air flow is required, damage inside the enclosure 10 that is generated according to the air flow can be prevented.

While preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An audio output device comprising:
a speaker driver which includes a diaphragm to generate sound, and wherein the diaphragm is arranged on a front side;
an enclosure wherein the speaker driver is arranged on the inside, and which fixes the speaker driver; and
a filter member that is arranged between the rear surface of the speaker driver and the inner surface of the enclosure,
wherein the filter member includes a plurality of through holes, and is arranged to be distanced from the inner surface of the enclosure.

2. The audio output device of claim 1,
wherein the filter member includes a first filter member and a second filter member which are sequentially arranged between the rear surface of the speaker driver and the inner surface of the enclosure, and which respectively include a plurality of through holes.

3. The audio output device of claim 2,
wherein at least one of the shapes or the arrangement form of the plurality of through holes formed respectively on the first member and the second filter member are different.

4. The audio output device of claim 1,
wherein the plurality of through holes are formed in at least one shape among a circle, an oval, a polygon, and a polygon of which edges are round.

5. The audio output device of claim 1,
wherein the plurality of through holes are arranged in a matrix form.

6. The audio output device of claim 1,
wherein the enclosure is formed in a rectangular shape of which inside is empty, and
the upper part and the lower part of the filter member are fixed to the inner surface of the enclosure.

7. The audio output device of claim 1,
wherein the filter member has a plate shape on which a plurality of through holes are formed, and
the plurality of through holes are formed to penetrate the front and rear surfaces of the filter member.

8. The audio output device of claim 1,
wherein the filter member is formed to have a size corresponding to the rear surface of the speaker driver.

9. The audio output device of claim 1, further comprising:
a sound absorbing material arranged on one surface of the filter member.

10. The audio output device of claim 1,
wherein an interval between the filter member and the inner surface of the enclosure is determined according to a distance between the rear surface of the speaker driver and the inner surface of the enclosure.
